# EUROPEAN PATENT APPLICATION

(11) **EP 4 545 385 A1**
(43) Date of publication of application: **30.04.2025**
(21) Application number: 24208768.2
(22) Date of filing: 24.10.2024
(51) Int. Cl.: B62D 33/077

(54) **VEHICLE CHASSIS WITH AN ADAPTER FOR MOUNTING A COMPONENT**

(30) Priority: 26.10.2023 NL 2036135
(71) Applicant: DAF Trucks N.V., 5643 TW Eindhoven (NL)
(72) Inventor: VAN DER KNAAP, Albertus Clemens Maria, 5643 TW Eindhoven (NL); WEIJENBORG, Bernardus Johannes Maria, 5643 TW Eindhoven (NL)
(74) Representative: V.O.

(57) **Abstract**

A chassis (10) of a vehicle provided with at least one chassis adapter (20) for mounting (200) a component (30) onto the chassis (10), wherein the chassis adapter (20) comprises a first arm for at least partially supporting the component (30), and a second arm comprising a contact face; wherein the second arm comprises a first profile; wherein the chassis (10) comprises a second profile; wherein the chassis adapter (20) is configured to mount (200) the component (30) onto the chassis (10) by positioning the first arm at least partially under the component (30), and hooking the first profile of the second arm into the second profile of the chassis (10), thereby engaging the contact face of the second arm to the chassis (10) and attaching the component (30) to the first arm.

## Description

### TECHNICAL FIELD AND BACKGROUND

The present disclosure relates to a vehicle chassis with an adapter for mounting a component onto the chassis and a method thereof.

Of particular interest are heavy load vehicles such as trucks or tractor semi-trailers or combinations thereof in which the tractor vehicle pulls and partly supports the payload that is packed onto the semi-trailer.

A typical truck comprises a chassis, wheels, a driveline, an engine, fuel tanks, a cabin and several other components. The chassis forms a back-bone of the vehicle on which the individual components are mounted. Presently, during assembling the trucks in the manufacturing plant, the heavy components such as driveline or the engine are lowered from above into the chassis until rested on an opposing bracket system. The component is then screwed with bolts tight together with the chassis from the top.

The top-down assembly approach has a number of advantages. For instance, when the screwing bolts run loose during operation of the vehicle or after a maintenance activity, the heavy components cannot fall out of the chassis on the ground. Vertically lowering the component onto the bracket system minimizes the corresponding clearance penalty related to associated horizontal motions. The top-down assembly approach avoids cumbersome lifting of the vehicle or screwing bolts from beneath the vehicle with reduced accessibility for assembly mechanic.

Due to the increasing electrification of the trucks and the associated use of electric motors and batteries having lower volumetric energy density in comparison to conventional fossil fuels (like diesel), more and/or bigger components need to mounted on the chassis. These components include an electrical driveline, an electric energy storage battery system, a hydrogen storage system and (a plurality) of fuel cell devices. Large volume hydrogen tanks are typically placed sideward of the chassis in between the front and rear wheels or behind the cabin wall in front of the semi-trailer. Traditionally, only the space in between or below the chassis remains available to accommodate the additional components such as the electrical driveline, an electric energy storage battery system or a plurality of fuel cell devices. However, some of these components need to interface with other parts of the vehicle, e.g., to a supply duct for coupling an air, to a hydrogen supply duct or a water drain duct. The size and geometry of the components and/or their interfaces make it difficult or even impossible to use the top-down assembly approach, because of the collision with chassis beams which have a limited distance between each other that is typically smaller than the size of the component. For example, a typical driveline component is construed such that the whole packaging space available below the chassis beams is utilized for the purpose of installing and packing together all needed interfaces and module subcomponents into one large rigid encapsulating component. Integrating and assembling the component from beneath into the chassis is cumbersome or even hindered due to presence of the bracket system and/or limited accessibility to the mounting bolts used to attach the component to the bracket system. Often, additional space for aligning a component to the bracket system or vice versa needs to be taken into the account, thus limiting the size and/or the number of components that can be mounted onto the chassis.

Given the limitations of the present assembly approaches, there remains a need for a new space-efficient solution for mounting components onto a chassis of a vehicle.

### SUMMARY

Aspects of the present disclosure relate to a chassis of a vehicle provided with at least one chassis adapter for mounting a component onto the chassis. The chassis adapter comprises a first arm configured to at least partially support the component, a second arm comprising a contact face, and a fixation means configured to secure the chassis adapter onto the chassis. In one aspect of the present disclosure, the second arm comprises a first profile and the chassis comprises a second profile shaped correspondingly to the first profile with an edge upstanding in a direction opposite to gravitational forces acting on the chassis. The chassis adapter is configured to mount the component onto the chassis by hooking the first profile of the second arm into the second profile of the chassis, thereby engaging the contact face of the second arm to the chassis, and by positioning the first arm at least partially under the component, thereby attaching the component to the first arm. In another aspect of the present disclosure, the contact face is secured to the chassis by the fixation means to prevent displacement of the first profile from the second profile, e.g., during a bumpy ride of the vehicle.

By providing the chassis adapter with a first profile comprising a protrusion e.g. in the form of a wedge-, ball-, cylinder-, hook- or any other geometric shape that provides for a form-locking mechanism, and the second profile with a corresponding shape for receiving said first profile, self-alignment of the chassis adapter to the chassis can be realized, thus simplifying the mounting of the component to the chassis.

Advantageously, by providing the chassis with a plurality of second profiles and/or a continuous second profile along a length or a width of the chassis, the chassis adapter, which is relatively light and small with respect to the component, can be hooked at a position which is the most optimal to attach and/or support the component, for example the closest or the easiest position to access, preferably at a stable chassis location on or adjacent to a cross member in a typical ladder frame of a truck.

By providing a plurality of chassis adapters across the chassis, the load of the component can be spread over the chassis, thereby lowering the risk of breaking the chassis during operation of the vehicle, e.g., when driving over a rough or wobbly terrain. Alternatively, a three-point-mounting system comprising three elastomeric bushings arranged between the chassis adapter and the component can be utilized to absorb chassis torsional deformations and/or vibrations caused by the load of the component onto the chassis.

By providing the chassis adapter with an L-shape, the chassis adapter can be arranged under the component, therefore providing the maximum space for the component in the lateral direction, e.g., extending from one chassis beam to the other.

Advantageously, by providing the chassis adapters with a reinforcement structure reinforcing the connection between the second arm and the first arm of the chassis adapter, load carrying capacity and/or stiffness of the chassis adapter can be increased by at least a factor of two and/or less chassis adapters can be used for mounting the same amount of load.

By providing a bracket between the chassis and the chassis adapter, both a component under the chassis and a bridge member above the chassis can be mounted to said bracket.

By providing the component with a plurality of mount parts arranged between the component and the chassis adapter, various components can be mounted to the chassis adapter, e.g., components of different shapes and/or materials. By providing the respective mount part with a bushing, an attachment means, e.g., bolts or plugs, can be guided from the mount part to the chassis adapter, thereby easing attachment of the mount part to the chassis adapter. By providing the mount part and/or the chassis adapter with an elastomeric bushing, mechanical vibrations of the component can be reduced and/or isolated.

Advantageously, by providing the component with an inverted T-shape, size of the component that can fit in the storage space underneath the chassis can be maximized. By providing the component with a L-shape, extra free space in the storage space underneath the chassis can be provided for, e.g., air ducts sideways connecting to the storage unit, or cabling, tubing or other kind of connections and/or attachments that need to be arranged adjacent to the component.

By providing an electric vehicle with a component configured to store and/or extract electric energy, e.g., fuel cell, the maximum drive range of the vehicle can be extended.

In one aspect of the invention, by providing lifting support to the component, the component can be guided from below into the chassis thereby bypassing obstacles present on or above the chassis, e.g., a central cross member connecting two longitudinal chassis beams, thus allowing attaching a chassis adaptor to the chassis and underneath the component and/or its respective mount part.

Advantageously, by providing the component with a lifting support moving in a straight vertical line and mounting the component with the form-locking chassis adapter, there is no need for horizontal maneuvering of the component, thus simplifying the assembly process whilst minimizing the corresponding clearance penalty related to associated horizontal motions.

By removing the lifting support to the component, the component is resided on the first arm of a chassis adapter and thereby the gravitational forces pulling on the chassis adapter are enhanced, thereby securing the form-locking mechanism of the chassis adapter to the chassis.

By providing the chassis adapter with a compact design and lightweight material, the job of an assembly mechanic is eased because the chassis adapter can be easily and accurately inserted into the second profile on the chassis with only one hand whilst the other hand can be used for handling a mounting tool for providing the fixation means, e.g., using a screw driver to fasten a bolt.

The advantageous technical effects of this disclosure contribute to a safe, healthy and ergonomically friendly working environment in a vehicle assembly factory while lowering the time needed to assemble the vehicle.

### BRIEF DESCRIPTION OF DRAWINGS

These and other features, aspects, and advantages of the apparatus, systems and methods of the present disclosure will become better understood from the following description, appended claims, and accompanying drawing wherein:
FIGs 1A-B illustrate a chassis of a vehicle with a mounted component;
FIGs 2A-C illustrate various aspects of mounting a component to a chassis according to an embodiment of the invention;
FIGs 3A-C illustrate various embodiments of a chassis adapter;
FIG 4A illustrates a reinforced chassis adapter;
FIG 4B illustrates a bracket with an additional functionality of connecting a hydrogen storage system frame to the chassis at a back side of a vehicle cabin;
FIG 4C illustrates accessibility of the chassis adapter for tools used to fasten attachment means of the chassis adapter from above a chassis.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

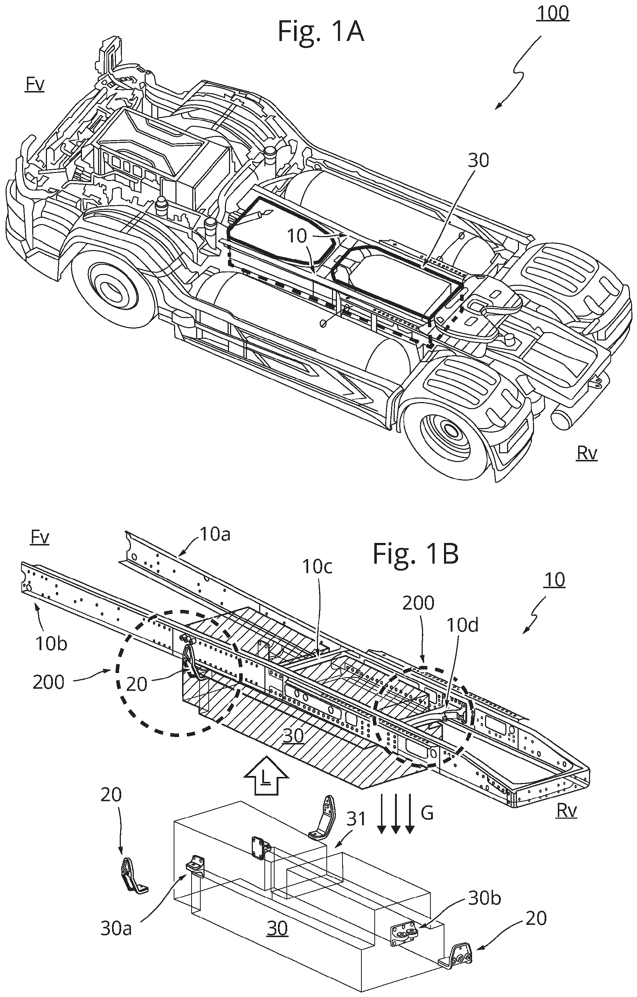

FIGs 1A-B illustrate a chassis 10 of a vehicle 100 provided with at least one chassis adapter 20 for mounting 200 a driveline component 30, e.g., a fuel cell module, into the center of a chassis 10 in between two elongated chassis beams 10a, 10b.

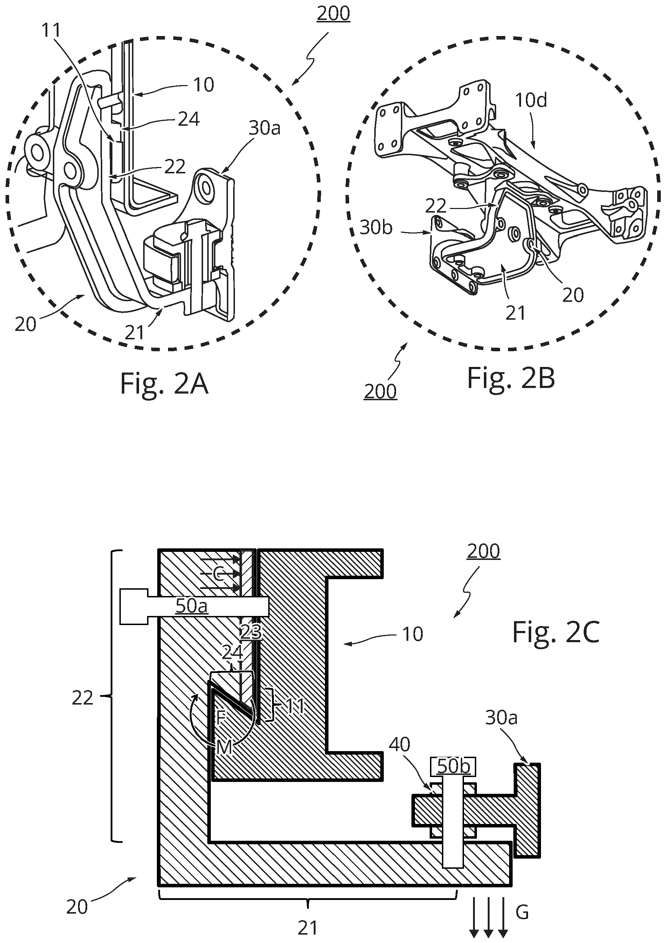

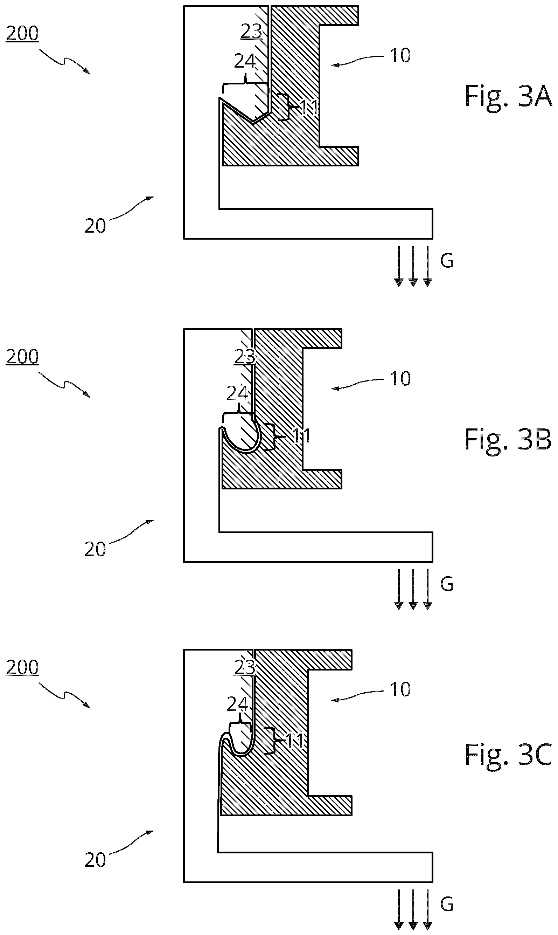

In some embodiments, e.g. as shown in FIGs 2A-2C, the chassis adapter 20 comprises a first arm 21 configured to at least partially support the component 30, and a second arm 22 comprising a contact face 23, fixation means 50a is configured to secure a form lock of the chassis adapter 20 onto the chassis 10. In one embodiment, the first arm 21 transfers into the second arm 22 at an angle smaller than π radians, i.e. smaller than ninety degrees, preferably in a range from forty five up to one hundred and twenty degrees. In another or further embodiment, the second arm 22 comprises a first profile 24. In yet another or further embodiment, e.g., as shown in FIG 2C or FIGs 3A-C, the chassis 10 comprises a second profile 11 shaped correspondingly to the first profile 24 with an edge upstanding in a direction opposite to gravitational forces G acting on the chassis 10. In other or further embodiments, the chassis adapter 20 is configured to mount the component 30 onto the chassis 10 by providing the first arm 21 at least partially under the component 30, and hooking the first profile 24 of the second arm 22 into the second profile 11 of the chassis 10, thereby engaging the contact face 23 by a compressional force C, caused by the weight of the component 30 through a torsional moment M around an edge of the second profile 11.

In some embodiments, e.g. as shown in FIG 2C, the second arm 22 of the chassis adapter 20 is hooked by the first profile 24 to the second profile 11 arranged on a first side of a chassis beam. In another or further embodiment, the second arm 22 transfers into the first arm 21 towards a second side of the chassis beam for providing a torsional moment M around the edge.

Preferably, the contact face 23 is secured to the chassis 10 by a fixation means 50a, e.g., a bolt, a plug, a rivet, a snap-lock or other type of a fixation means to prevent vibrating loose, for instance during a bumpy ride. In one embodiment, the fixation means 50a are realized by a combination of measures without applying a further securing device element like a bolt or a plug in the second arm 22. For example, two attachment means 50b arranged at two opposing sides of the component 30 can be used to fixate two separate chassis adapters 20 in the lateral direction and a form-locking first profile 24, protruding into the chassis 10 material in both the vertical direction and also at least partly in the lateral direction as shown in FIG 3B, fixates the respective chassis adapter 20 in the vertical and horizontal directions, thereby securing the respective form locks of the two separate chassis adapters 20 on the chassis 10.

Typically, the amount of engaging of the contact face 23 to the chassis 10 is proportional to the compression forces C acting on the contact face 23, which are proportional to gravitational forces G acting on the chassis adapter 20 and/or the component 30 supported by the chassis adapter 20. In some embodiments, e.g., as shown in FIG 2C, the compression forces C are acting on the contact face 23 above a fulcrum F formed by the edge of the second profile 11 around which the chassis adapter 20 can exert the torsional moment M.

FIGs 3A-C illustrate various embodiments of a chassis adapter. In some embodiments, the chassis 10 comprises a first profile 24 provided with a shape configured to self-align and/or form-lock with a second profile 11 by means of a movement M around a fulcrum F (as indicated in FIG 2C) formed by hooking the first profile 24 of the second arm 22 into the second profile 11 of the chassis 10. Typically, the movement M is supported by gravitational forces G acting on the chassis adapter 20 and/or a component 30 residing on the chassis adapter 20. In FIG 2C and 3A the first profile 24 and the corresponding second profile 11 are shaped by a wedge-shaped triangle geometry. In one embodiment, the angle between the wedge-shaped first profile 24 and the second arm 22 is in a range between zero and ninety degrees, preferably in a range from twenty up to seventy degrees. In FIG 3B and 3C the first profile 24 and its second profile 11 are shaped by a ball-shaped cross section geometry. In FIG 3B the ball-shaped geometry protrudes (or hooks) into the chassis 10 material in both the vertical direction and also at least partly in the lateral direction for the purpose of reducing risk of vibrating loose during a bumpy ride. In other or further embodiments, e.g. as shown in FIGs 2A and 3A-C, is the first profile 24 of the second arm 22 embraced in a portion of the chassis 10.

Preferably, the chassis 10 comprises a plurality of second profiles configured to receive the first profile 24 of a chassis adapter 20 at a plurality of distinct positions. In one embodiment, the chassis 10 comprises at least one chassis adapter 20 provided on each of at least two opposing sides of the chassis 10 and at least one another chassis adapter 20 provided on a cross member 10d laterally extending across the opposing sides of the chassis 10, e.g., at a location of the rear axle and below a fifth wheel coupling plate.

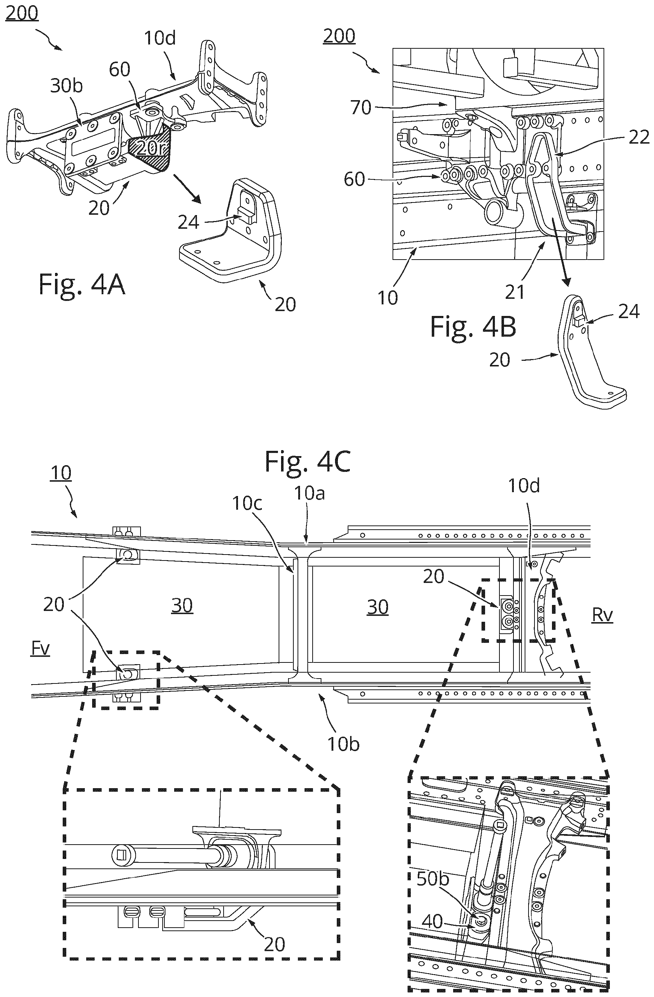

In some embodiments, the chassis adapter 20 is provided with an L-shape. In one embodiment, e.g., as shown in FIG 4A, the chassis adapter 20, which is connected to the cross member 10d at the rear Rv of the vehicle 100, comprises a reinforcement structure 20r provided on at least one side of the chassis adapter 20, thereby reinforcing the connection between the second arm 22 and the first arm 21 of the chassis adapter 20 to increase a load capacity of the chassis adapter 20 by at least a factor of two. In one embodiment, the reinforcement structure 20r has a form of a plate. Typically, the chassis adapter 20 has a load capacity of at least ten, preferably at least hundred times more than the static gravitational load on the chassis adapter 20. In one embodiment, the chassis adapter 20 provided with the reinforcement structure 20r has a static load capacity of at least three hundred kilograms and a dynamic load capacity, e.g., during a bumpy ride, of at least a factor of two, preferably a factor in a range from five to ten higher as compared to the static load capacity. In another or further embodiment, the chassis adapter 20 provided with a reinforcement structure is arranged on a cross member 10d at the rear Rv of the vehicle 100. In yet further embodiments, the chassis adapter 20 provided with the reinforcement structure 20r carries a load of at least a factor of two larger as compared to the load carried by the chassis adapter 20 without the reinforcement structure 20r. Preferably, at least one chassis adapter 20 is arranged at the front Fv of the vehicle on each of the elongated chassis beams 10a, 10b and at least one another chassis adapter 20 is arranged on the cross member 10d at the rear Rv of the vehicle 100. Alternatively or in addition, the chassis adapter 20 deforms by less than half of a millimeter when exposed to a load capacity of at least one thousand kilograms.

In other or further embodiments, e.g., as shown in FIG 4A and FIG 4B, the second profile 11 is comprised on a bracket 60 arranged on the chassis 10. In one embodiment, the first profile 24 of the chassis adapter 20 is configured by shape with limited compact dimensions in height and width to be accurately positioned (also in longitudinal direction) and/or hooked into a corresponding second profile 11 hole forming part of the bracket 60. This eases the mounting operation during assembly and contributes to a simple and compact design of the chassis adapter 20 (separately shown in FIG 4A and 4B). FIG 2A illustrates a cross sectional view of the bracket system as illustrated in FIG 4B wherein the same first profile 24 and corresponding second profile 11 cut-out hole is visible. Following this design of a first profile with limited dimensions to be hooked into a corresponding second profile hole in bracket 60 (or directly in chassis 10), the fixation means 50a can be realized without the need for an additional securing bolt in the second arm 22 of the chassis adapter 20. As explained before in the case of an embodiment without a bracket, the fixation means 50a can be realized by a combination of measures, advantageously by interconnecting two opposing chassis adapters 20 via the component 30 using the respective attachment means 50b and activating the form-locking mechanism by gravitational forces pulling on the respective chassis adapter 20.

Alternatively or in addition, the bracket 60 at the front Fv of the vehicle 100 shown in FIG 4B comprises mounting means for mounting a hydrogen storage system 70 onto said bracket 60. In one embodiment, the hydrogen storage system 70 comprises a frame carrying one or more hydrogen vessels. In another or further embodiment, the frame of the hydrogen storage system provides a stable (rigid bridge member) interconnection between the two elongated chassis beams 10a, 10b. Consequently, this connection forms an additional chassis cross member that carries the bushing forces transmitted to the chassis via the two front chassis adapters of the three-point mounting system illustrated in FIG 1B and FIG 4C. In another or further embodiment, the bracket 60 is provided with an additional connection to a so-called cabin bridge (not shown), being construed by a straight or curved cross beam and facilitating further mounting points for the components (springs and dampers) of the cabin suspension, which also interconnects the two elongated chassis beams at the back of the cabin and thus forms an additional chassis cross member. In yet further embodiments, the bracket 60 provides multiple functionality of facilitating mounting of the component 30 (e.g. fuel cell box) via the plurality of the chassis adapters 20 onto the chassis, and a connection of a front wheel mudguard support, a front axle leaf spring, and/or a hydrogen tank on a side of the chassis 10.

Preferably, the attachment means 50b of the chassis adapter 20 to the component 30 are configured to be accessible from above, e.g., as shown in FIG 4C for reasons of standardized assembly operations in the vehicle manufacturing plant with the objective of reduced cycle times and ergonomic handling of the tool that are being used during the assembly of the vehicle 100.

In yet further embodiments, the component 30 is provided with a plurality of mount parts 30a, 30b arranged between the component 30 and the chassis adapter 20, e.g., on a sidewall of the component 30. In one embodiment, the plurality of mount parts 30a, 30b comprises an attachment means 50b configured to attach the respective mount part 30a, 30b to the first arm 21 of the chassis adapter 20, thereby mounting the component 30 to the chassis 10, e.g., as illustrated in FIG 4C. In another or further embodiment, at least one of the plurality of mount parts 30a, 30b comprises a bushing 40 for guiding the attachment means 50b to the first arm 21 of the chassis adapter 20. In one embodiment, the bushing 40 comprises an elastomeric material that transmits the forces between the chassis adapter 20 and the mount parts 30a,30b for the purpose of component vibration isolation and provision of local cardanic angle motions that typically occur during deformation of the chassis 10, e.g., in the case of the three-point mounting of the component 30 illustrated in FIG 1B and 4C. Preferably, the attachment means 50b and/or the bushing 40 is accessible from above via a space in-between the component 30 and the chassis 10.

In other or further embodiments, the chassis 10 comprises a pair of elongated chassis beams 10a, 10b extending along the length of the vehicle 100. In one embodiment, the chassis 10 comprises a central cross member 10c laterally extending across the chassis beams 10a, 10b. Typically, a storage space configured to receive a component 30 is provided between the chassis beams 10a, 10b extending underneath the cross member 10c. Preferably, the component 30 is mounted in the storage space by at least one chassis adapter 20. In one embodiment, a plurality of chassis adapters mounted on the elongated chassis beams 10a, 10b has mechanical properties different from a chassis adapter mounted on the cross member 10d, e.g., different axial and/or lateral stiffness or torsional properties which are provided by the elastomeric material comprised in the bushing 40. For example, the bushing 40 on the cross member 10d provided at a rear R of a vehicle 100 has a lower stiffness than the plurality of chassis adapter bushings on the elongated beams at the front Fv of the vehicle 100, thereby accommodating for torsional and/or vertical vibrations of the component 30 at the rear Rv of the vehicle 100.

In yet further embodiments, the component 30 is provided with an inverted T-shape or a L-shape cross section extending into said storage space. In one embodiment, the component 30 is a fuel cell configured to provide electric energy to the vehicle 100.

In some embodiments, e.g., as illustrated in FIGs 1B and 2C, a method of mounting 200 a component 30 onto a chassis of a vehicle 100 using the chassis 10 comprises providing a lifting support L to a component 30 from below into the chassis 10, hooking the first profile 24 of the second arm 22 into the second profile 11 of the chassis 10, thereby engaging by form-locking and compression forces C the contact face 23 of the second arm 22 to the chassis 10 and attaching the component 30 to the first arm 21. Typically, removing the lifting support L provides residing of the component 30 on the first arm 21 of at least one chassis adapter 20. This vertical lifting and dropping method of mounting the component 30 provides the technical effect of avoiding packaging clearance penalties that are associated with simultaneous horizontal maneuvering of the component during the assembly operation. Consequently, the assembly process is simplified and the corresponding clearance penalty related to associated horizontal motions are minimized. Since said vertical lifting and dropping method enables mounting of component 30 below a central cross member 10c, the corresponding cutout space 31 shown in FIG 1B can be reduced to a minimum amount as clearance penalties related to the associated horizontal motions are advantageously avoided, as a result of which more space under the chassis can be utilized for mounting the component 30.

For the purpose of clarity and a concise description, features are described herein as part of the same or separate embodiments, however, it will be appreciated that the scope of the invention may include embodiments having combinations of all or some of the features described.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A chassis (10) of a vehicle (100) provided with at least one chassis adapter (20) for mounting (200) a component (30) onto the chassis (10),
wherein the chassis adapter (20) comprises a first arm (21) configured to at least partially support the component (30), and a second arm (22) comprising a contact face (23) and a fixation means (50a) configured to secure the chassis adapter (20) onto the chassis (10);
wherein the second arm (22) comprises a first profile (24);
wherein the chassis (10) comprises a second profile (11) shaped correspondingly to the first profile (24) with an edge upstanding in a direction opposite to gravitational forces (G) acting on the chassis (10);
wherein the chassis adapter (20) is configured to mount (200) the component (30) onto the chassis (10) by
positioning the first arm (21) at least partially under the component (30), and
hooking the first profile (24) of the second arm (22) onto the edge of the second profile (11), thereby engaging the contact face (23) of the second arm (22) to the chassis (10) and attaching the component (30) to the first arm (21), wherein the fixation means (50a) prevents displacement of the first profile (24) from the second profile (11).

2. The chassis (10) according to the preceding claim,
wherein the first profile (24) is provided with a shape configured to self-align with the second profile (11) by means of a movement (M) around a fulcrum (F) formed by hooking the first profile (24) of the second arm (22) into the second profile (11) of the chassis (10),
wherein the movement (M) is supported by gravitational forces (G) acting on the chassis adapter (20) and/or a component (30) residing on the chassis adapter (20).

3. The chassis (10) according to any of the preceding claims, wherein the chassis (10) comprises a plurality of second profiles configured to receive the first profile (24) of a chassis adapter (20) at a plurality of distinct positions.

4. The chassis (10) according to any of the preceding claims, wherein the chassis adapter (20) has a load capacity of at least five, preferably at least ten times more than the static gravitational load on the component (30).

5. The chassis (10) according to any of the preceding claims, wherein the chassis adapter (20) is provided with a first profile (24) comprising a wedge-shaped geometry.

6. The chassis (10) according to any of the preceding claims, wherein one from the group consisting of the first profile (24) and the second profile (11) has limited width and height with respect to the dimensions of the other member from the group, thereby configured to prevent displacements relative to each other.

7. The chassis (10) according to any of the preceding claims, wherein the fixation means (50a) is formed by an interconnection via attachment means (50b) of a component (30) arranged between two opposing chassis adapters (20) and/or by a securing bolt.

8. The chassis (10) according to any of the preceding claims, wherein the chassis adapter (20) is provided with an L-shape.

9. The chassis (10) according to any of the preceding claims, wherein the chassis adapter (20) comprises a reinforcement structure (20r) provided on at least one side of the chassis adapter (20), thereby reinforcing the connection between the second arm (22) and the first arm (21) of the chassis adapter (20) to increase stiffness and load capacity of the chassis adapter (20) by at least a factor of two.

10. The chassis (10) according to any of the preceding claims, wherein the second profile (11) is comprised on a bracket (60) that is arranged on a beam member or a cross beam member of the chassis (10).

11. The chassis (10) according to claim 10, wherein the bracket (60) is arranged in a close proximity of a cross beam member (10c) and/or a rigid bridge member (70).

12. The chassis (10) according to any of the preceding claims,
wherein the component (30) comprises a plurality of mount parts (30a, 30b) arranged between the component (30) and the chassis adapter (20);
wherein the plurality of mount parts (30a, 30b) comprises an attachment means (50b) configured to attach the respective mount part (30a, 30b) to the first arm (21) of the chassis adapter (20), thereby mounting the component (30) to the chassis (10).

13. The chassis (10) according to the preceding claim, wherein at least one of the plurality of mount parts (30a, 30b) is provided with a bushing (40) comprising an elastomeric material.

14. The chassis (10) according to the preceding claim, wherein the bushing (40) is accessible by tooling from above the chassis (10) via a space in-between the component (30) and the chassis (10).

15. The chassis (10) according to any of the preceding claims, wherein the chassis (10) comprises
a pair of elongated chassis beams (10a, 10b) extending along the length of the vehicle (100),
a cross member (10c) laterally extending across the chassis beams (10a, 10b), wherein a storage space configured to receive a component (30) is provided between the chassis beams (10a, 10b) extending underneath the cross member (10c);
wherein the component (30) is mounted in the storage space by at least one chassis adapter (20).

16. The chassis (10) according to the preceding claim, wherein a three point connection is formed by at least two chassis adapters (20) provided on the pair of elongated chassis beams (10a, 10b) on two opposing sides of the chassis (10) at the front (Fv) of the component (30) and by at least a third chassis adapter (20) provided at the rear (Rv) of the component (30) on a cross-member (10d) laterally extending across the pair of elongated chassis beams (10a, 10b).

17. The chassis (10) according to claim 10, wherein the component (30) is provided with an inverted T-shape or a L-shape cross section extending into said storage space.

18. The chassis (10) according to any of the preceding claims, wherein the component (30) is a fuel cell system module or a battery module configured to provide electric energy to the vehicle (100).

19. A method of mounting (200) a component (30) onto a chassis of a vehicle (100) using the chassis (10) according to any of the preceding claims, the method comprising
providing a lifting support (L) to a component (30) from below into the chassis (10),
hooking the first profile (24) of the second arm (22) onto the edge of second profile (11) of the chassis (10), thereby engaging the contact face (23) of the second arm (22) to the chassis (10) and attaching the component (30) to the first arm (21).
removing the lifting support (L) and thereby residing the component (30) on the first arm (21) of at least one chassis adapter (20), and
preventing displacement of the first profile from the second profile by a fixation means (50a).
